# EUROPÄISCHE PATENTSCHRIFT

(11) **EP 1 347 885 B1**
(45) Veröffentlichungstag und Bekanntmachung des Hinweises auf die Patenterteilung: **05.04.2006**
(21) Anmeldenummer: 01271800.3
(22) Anmeldetag: 02.11.2001
(51) Int. Cl.: B60H 1/00

(54) **ANORDNUNG UND VERFAHREN ZUM KÜHLEN BEZIEHUNGSWEISE HEIZEN**
SYSTEM AND METHOD FOR COOLING OR HEATING
DISPOSITIF ET PROCEDE DE REFROIDISSEMENT OU DE CHAUFFAGE

(30) Priorität: 28.12.2000 DE 10065112
(43) Veröffentlichungstag der Anmeldung: 01.10.2003
(73) Patentinhaber: ROBERT BOSCH GMBH, 70442 Stuttgart (DE)
(72) Erfinder: LEUTHNER, Stephan, 70372 Stuttgart (DE); SATZGER, Peter, 70825 Korntal (DE); BEIL, Petra, 70197 Stuttgart (DE)
(74) Vertreter: Grosse, Rainer
(86) Internationale Anmeldenummer: PCT/DE2001/004135
(87) Internationale Veröffentlichungsnummer: WO 2002/053399

(56) Entgegenhaltungen:
- EP-A- 0 566 854
- EP-A- 1 176 036
- DE-A- 19 752 259
- DE-A- 19 956 252

## Beschreibung

Die vorliegende Erfindung betrifft eine Anordnung zum Kühlen beziehungsweise Heizen gemäß dem Oberbegriff des Anspruchs 1.

### Stand der Technik

Eine gattungsgemäße Anordnung ist aus der EP-A-0 566 854 A2 bekannt, um insbesondere Innenräume von Kraftfahrzeugen zu kühlen beziehungsweise zu heizen. Die Kühlung mit derartigen Anordnungen und Verfahren mittels einer in einem Kraftfahrzeug eingebauten Klimaanlage ist bereits seit langem bekannt. Zunehmend gewinnt aber auch die Beheizung mit derartigen Anordnungen an Bedeutung. Hierfür ist nicht zuletzt die Entwicklung verbrauchsoptimierter Motoren verantwortlich, da bei diesen nicht ausreichend Wärme ins Kühlmittel abgegeben wird, um das Fahrzeug bei niedrigen Temperaturen im Schwachlastbetrieb komfortabel zu beheizen. Dies gilt insbesondere für direkteinspritzende Dieselmotoren, welche bereits gattungsgemäße Zuheizer besitzen, um dem Komfort bei niedrigen Temperaturen sicherzustellen. Auch Kraftfahrzeuge mit Benzindirekteinspritzung müssen zukünftig mit Zuheizern ausgestattet werden, damit eine komfortable Innenraumtemperatur aufrechterhalten werden kann.

Die meisten Fahrzeuge der Oberklasse und zunehmend auch der Mittelklasse werden standardmäßig mit einer Klimaanlage ausgestattet. Die Komponenten einer solchen Klimaanlage können bei tiefen Umgebungstemperaturen durch eine Umkehrung des Wärmekreislaufes als Wärmepumpe genutzt werden. Eine solche Wärmepumpe zeichnet sich durch einen geringen Energieverbrauch und ein spontanes Ansprechverhalten bei hoher Heizleistung aus. Dies ist für Zuheizerkonzepte hinsichtlich der Sicherheit, beispielsweise mit Bezug auf eine Fahrzeugscheibenenteisung, und des Komforts ein zukunftsweisendes Konzept.

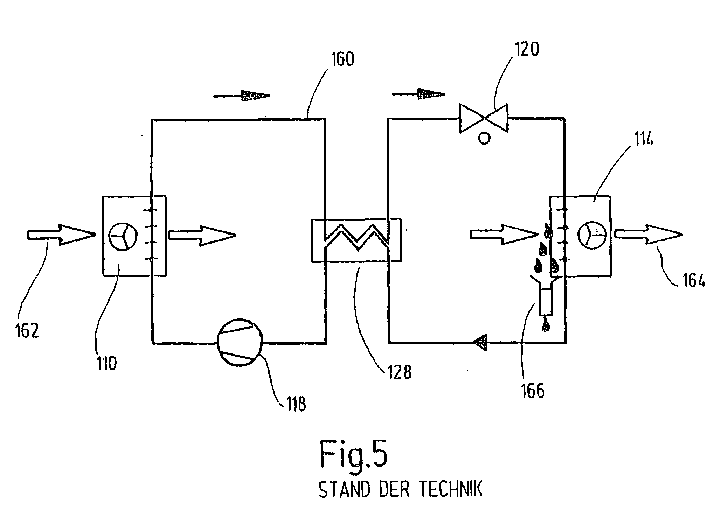

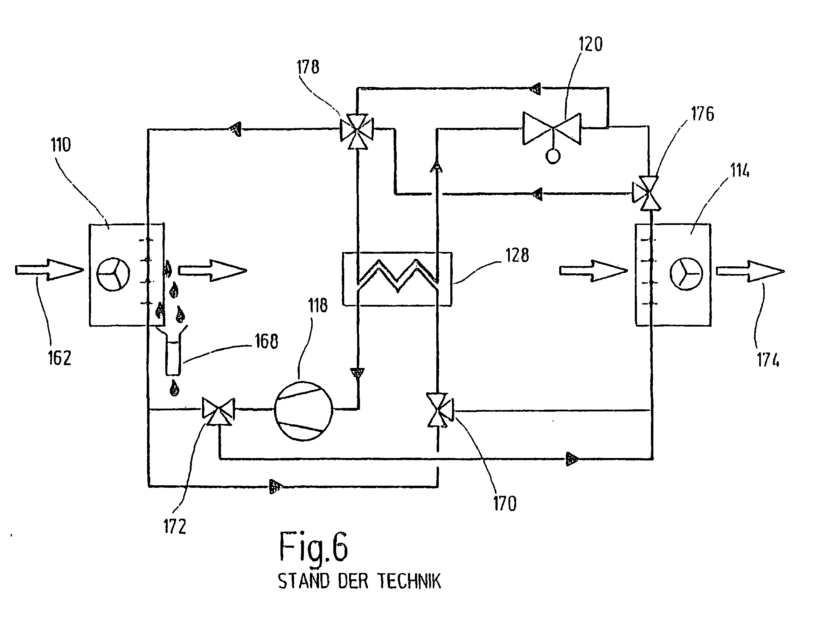

In den Figuren 5 und 6 sind zwei Klimaanlagenschaltungen dargestellt, wobei in Figur 5 ein herkömmlicher Kühlbetrieb veranschaulicht ist, während in Figur 6 ein Heizbetrieb mit den für den Heizbetrieb zusätzlich erforderlichen Komponenten gezeigt ist.

In Figur 5 ist schematisch eine Klimaanlagenschaltung gezeigt. In einen ersten Wärmeübertrager 110 tritt ein erstes Medium ein, welches einen Kreislauf 160 durchströmt. Das Medium gibt an die Umgebungsluft 162 Wärme ab und kühlt somit selbst ab. Aus dem Wärmeübertrager 110 tritt ein abgekühltes Medium aus. Dieses abgekühlte Medium wird nun durch einen inneren Wärmeübertrager 128 geleitet, dessen Funktion weiter unten erläutert wird. Nach dem Austritt des Mediums aus dem inneren Wärmeübertrager 128 tritt das Medium in ein Expansionsorgan 120 ein. Das Medium kühlt durch Expansion stark ab und wird nachfolgend einem zweiten Wärmeübertrager 114 zugeführt. In diesem Wärmeübertrager 114 kann das kalte Medium warme Umgebungsluft beziehungsweise Umluft abkühlen und in Form von kalter Luft 164 einem zu kühlenden Raum, beispielsweise dem Kraftfahrzeuginnenraum, zur Verfügung stellen. Bei diesem Vorgang kommt es zur Bildung von Kondensat 166. Das nun aufgrund des Wärmeaustauschs in dem Wärmeübertrager 114 wieder erwärmte und verdampfte Medium tritt aus dem Wärmeübertrager 114 aus und durchströmt nachfolgend wiederum den inneren Wärmeübertrager 128. Nach Austritt aus dem inneren Wärmeübertrager 128 gelangt das Medium in einen Kompressor 118, wo es durch Kompression auf höheren Druck gebracht und erwärmt wird. Somit steht wieder ein erwärmtes Medium zur Verfügung, welches in den ersten Wärmeübertrager 110 zum Wärmeaustausch eintreten kann. Der Kreislauf ist geschlossen.

Der innere Wärmeübertrager 128 dient der Leistungssteigerung im Kreislauf. So wird das Medium vor dem Eintritt in das Expansionsorgan 120 durch das rückströmende Medium, welches aus dem zweiten Wärmeübertrager 114 ausgetreten ist, gekühlt, während das rückströmende Medium im Gegenzug erwärmt wird. Durch diesen Wärmeaustausch wird der Flüssigkeitsanteil im Fluid bei Austritt aus dem Expansionsorgan 120 erhöht. Somit kommt es zu einer Steigerung des Wirkungsgrads im Kreislauf.

In Figur 6 ist ein Kreislauf dargestellt, der im Vergleich zu Figur 5 mit zusätzlichen Komponenten ausgestattet ist. Diese Komponenten sind erforderlich, um den Kreislauf zum Heizen eines Raums zu nutzen. Wiederum wird der Kreislauf ausgehend von dem Einströmen des Medium in den ersten Wärmeübertrager 110 beschrieben. Es tritt kaltes Medium in den Wärmeübertrager 110 ein. Das kalte Medium wird in dem Wärmeübertrager durch Wechselwirkung mit der Umgebungsluft 162 erwärmt und verdampft, während die Umgebungsluft abgekühlt wird. Hierbei kann es temperaturabhängig zur Bildung von Kondensat beziehungsweise Eis 168 kommen. Nach dem Ausströmen des Mediums aus dem ersten Wärmeübertrager strömt dieses über ein erstes Ventil 170 in den inneren Wärmeübertrager 128 ein. Nach dem Austritt des Mediums aus dem inneren Wärmeübertrager 128 strömt es in den Kompressor 118 ein, wo es komprimiert und erwärmt wird. Nachdem das Medium den Kompressor verlassen hat, strömt es über ein zweites Ventil 172 in den zweiten Wärmeübertrager ein. Dort kann das erwärmte Medium kalte Umgebungsluft beziehungsweise kalte Umluft erwärmen und somit als Nutzwärme 174 einem zu erwärmenden Raum zur Verfügung stellen. Das Medium tritt in abgekühltem Zustand aus dem zweiten Wärmeübertrager 114 aus und nachfolgend in ein drittes Ventil 176 ein. Dieses dritte Ventil 176 leitet den Strom des Mediums zu einem vierten Ventil 178, wo das Medium wiederum so geleitet wird, dass es in den inneren Wärmeübertrager 128 eintritt. Nach dem Austritt aus dem inneren Wärmeübertrager 128 tritt das Medium in das Expansionsorgan 120 ein, wird dort durch Expansion abgekühlt und über ein Ventil 178 wiederum in den ersten Wärmeübertrager eingeleitet. Der Kreislauf des Mediums ist geschlossen.

Wiederum dient der innere Wärmeübertrager 128 zur Leistungssteigerung. Zum einen wird das erwärmte Medium, welches im Kompressor 113 weiter zu erwärmen ist, in dem inneren Wärmeübertrager 128 durch das rückströmende Medium, welches aus dem zweiten Wärmeübertrager 114 in den inneren Wärmeübertrager einströmt, erwärmt. Zum anderen wird dieses rückströmende Medium vor der Abkühlung durch Expansion in dem Expansionsorgan 120 durch das in den Wärmeübertrager einströmende Medium, welches aus dem ersten Wärmeübertrager 110 ausgetreten ist, abgekühlt.

Es ist erkennbar, dass für eine Realisierung einer Anordnung, welche sowohl einen Kühl- als auch einen Heizbetrieb gestattet, zusätzliche Komponenten erforderlich sind. Dabei handelt es sich insbesondere um die Ventile 170, 172, 176 und 178, welche durch geeignete Umschaltung entweder einen Heizkreislauf oder einen Kühlkreislauf realisieren können. Neben den Ventilen 170, 172, 176 und 178 sind weitere Zusatzkomponenten, wie beispielsweise Zusatzleitungen, erforderlich, was eine weitere Erhöhung des Gewichts und einen weiteren Aufwand nach sich zieht. Ebenfalls wird durch die höhere Zahl an erforderlichen Leitungen und vor allem Verbindungen die Störanfälligkeit und insbesondere die Anfälligkeit für Undichtigkeiten erhöht.

In der nachveröffentlichten EP 1 344 995 A1 ist eine mit CO₂ als Kältemittel betriebene Anordnung der eingangs genannten Art beschrieben, während die EP 0 566 854 A2 bereits eine ähnliche Anordnung offenbart, bei der jedoch der erste Wärmeübertrager, der zweite Wärmeübertrager, der Kompressor, das Expansionsorgan und die Mittel zum Umschalten einen von einem Kältemittel durchströmten Primärkreislauf und einen von Wasser durchströmten Sekundärkreislauf bilden.

### Vorteile der Erfindung

Die Erfindung baut auf der Anordnung gemäß EP 0 566 854 A2 dadurch auf, dass der erste Wärmeübertrager, der zweite Wärmeübertrager, der Kompressor, das Expansionsorgan und das Modul einen von CO₂ durchströmten geschlossenen Kreislauf bilden, wodurch ohne Sekundärkreislauf der erste Wärmeübertrager im Heizbetrieb Wärme aus dem Wärmereservoir entnehmen und im Kühlbetrieb Wärme in das Wärmereservoir abgeben kann, während der zweite Wärmeübertrager im Heizbetrieb Wärme in den zu heizenden Raum abgeben und im Kühlbetrieb Wärme aus dem zu kühlenden Raum entnehmen kann. Durch die kompakte Bauweise infolge der Integration der Mittel zum Umschalten in ein Modul werden zudem insbesondere Leitungslängen und störanfällige Verbindungen eingespart und der Installationsaufwand reduziert. Neben der Einsparung von Leitungen, welche das Kühlmedium führen, können aufgrund der Modulstruktur auch die Anzahl und die Länge der elektrischen Leitungen reduziert werden.

Wenn die Mittel zum Umschalten erfindungsgemäß ein erstes Ventil und ein zweites Ventil mit jeweils vier Ports umfassen, ist im Vergleich zu der in der EP 1 344 995 A1 beschriebenen Anordnung eine besonders kompakte Realisierung der Erfindung möglich, da die Anzahl der Druckanschlüsse verringert wird und da ferner eine kleine Bauweise begünstigt wird.

Vorzugsweise ist zwischen dem ersten Wärmeübertrager und dem zweiten Wärmeübertrager ein innerer Wärmeübertrager vorgesehen. Ein solcher innerer Wärmeübertrager dient der Leistungssteigerung der Kühl- bzw. Heizanordnung. Im Falle des Kühlbetriebs wird erwärmtes CO₂, welches aus dem ersten Wärmeübertrager zu dem zweiten Wärmeübertrager zurückströmt, vor der Expansion abgekühlt, wobei zu diesem Zweck das von dem zweiten Wärmeübertrager zu dem Kompressor strömende CO₂ verwendet wird. Die Temperatur des hin- bzw. rückströmenden Mediums wird also in vorteilhafter Weise auf den nachfolgenden Vorgang vorbereitet.

Vorzugsweise ist die Erfindung dadurch weitergebildet, dass bei dem ersten Ventil ein erster Port mit dem ersten Wärmeübertrager verbunden ist, ein zweiter Port mit dem Expansionsorgan verbunden ist, ein dritter Port mit dem inneren Wärmeübertrager verbunden ist und einer vierter Port mit dem zweiten Wärmeübertrager verbunden ist. Auf diese Weise sind bei dem ersten Ventil die Vorraussetzungen geschaffen, die Umschaltung eines Teils des Kreislaufs des Mediums zwischen Heizbetrieb und Kühlbetrieb in korrekter Weise durchzuführen.

Ebenfalls ist die Erfindung in vorteilhafter Weise dadurch weitergebildet, dass bei dem zweiten Ventil ein erster Port mit dem ersten Wärmeübertrager verbunden ist, einer zweiter Port mit dem inneren Wärmeübertrager verbunden ist, ein dritter Port mit dem Kompressor verbunden ist und ein vierter Port mit dem zweiten Wärmeübertrager verbunden ist. Somit ist das zweite Ventil ebenfalls in der Lage, die für sowohl den Heizbetrieb als auch den Kühlbetrieb erforderlichen Kreisläufe zu steuern.

Es ist vorteilhaft, dass im Kühlbetrieb der erste und der dritte Port des ersten Ventils und der zweite und der vierte Port des ersten Ventils miteinander verbunden sind und dass im Kühlbetrieb der erste und der dritte Port des zweiten Ventils und der zweite und der vierte Port des zweiten Ventils miteinander verbunden sind. Somit steht eine Einstellung der Ventile zur Verfügung, die einen Kühlbetrieb ermöglicht.

Ferner ist vorteilhaft, dass im Heizbetrieb der erste und der zweite Port des ersten Ventils und der dritte und der vierte Port des ersten Ventils miteinander verbunden sind und dass im Heizbetrieb der erste und der zweite Port des zweiten Ventils und der dritte und der vierte Port des zweiten Ventils miteinander verbunden sind. Auf diese Weise wird das Medium in der für den Heizbetrieb vorteilhaften Weise durch das System geführt.

Es ist von besonderem Nutzen, wenn die Mittel zum Umschalten wenigstens teilweise von einem gemeinsamen Antrieb betätigbar sind. Dies reduziert die Anzahl der erforderlichen Komponenten.

In diesem Zusammenhang kann es besonders vorteilhaft sein, wenn die Mittel zum Umschalten wenigstens teilweise von einem hydraulischen oder pneumatischen Antrieb, zum Beispiel mit dem Kältemittel, betätigbar sind. Ein solcher hydraulischer oder pneumatischer Antrieb kann durch einen Druckunterschied des Kältemittels am Kompressor direkt oder indirekt gespeist werden. Für diese Ansteuerung ist ein sehr kleines Magnetventil ausreichend.

Ebenfalls ist es nützlich, wenn in dem Modul der innere Wärmeübertrager integriert ist. Durch die weitere Integration des Wärmeübertragers neben beispielsweise den Mitteln zum Umschalten wird eine weitere Reduzierung der Baugröße erreicht.

Aus demselben Grund kann es nützlich sein, wenn in dem Modul das Expansionsorgan integriert ist. Dies hat unter anderem den Vorteil, dass wiederum eine weitere Verringerung der Bauform erreicht wird, welche zudem mit einer Verkürzung der hydraulischen Wege einhergeht.

Von besonderem Nutzen ist es, wenn in dem Modul der Kompressor integriert ist. Somit kann auch dies zur weiteren Verkleinerung der Anlage führen.

Nützlicherweise kann in dem Modul ein Sammler integriert sein. Bei Anlagen mit Sammler kann die Integration dieses Bauteils ebenfalls die Vorteile der Erfindung unterstützen.

Aus demselben Grund kann es nützlich sein, wenn in dem Modul ein Ölabscheider integriert ist.

Auch kann in nützlicher Weise in dem Modul ein Heißgas-Bypass-Ventil integriert sein, welches der Enteisung des Außenluftwärmetauschers dienen kann.

Eine weitere integrierende Maßnahme wird im Rahmen der Erfindung dadurch zur Verfügung gestellt, dass in dem Modul Drucksensoren integriert sind. Diese können sowohl zur Sensierung des Hoch- als auch des Niederdrucks dienen. Durch die Integration einer Steuereinheit für alle Ventile und den Kompressor in das Modul kann der externe elektrische Installationsaufwand verkleinert werden.

Von besonderem Vorteil ist es, wenn zumindest ein Teil der in dem Modul integrierbaren Komponenten in einem gemeinsamen Druckgehäuse angeordnet sind. Durch ein solches gemeinsames Druckgehäuse kann die Dichtheit des Moduls und damit der Klimaanlage erhöht werden. Aufgrund der Verwendung eines gemeinsamen Druckgehäuses können innerhalb des Druckgehäuses Materialien verwendet werden, die vorher aufgrund der großen Druckdifferenzen nicht verwendet werden konnten. So ist zum Beispiel denkbar, dass Kunststoffe zum Einsatz kommen. Ebenfalls ist es möglich, unter Druck stehende Leitungen mit dünneren Wandstärken auszulegen, so dass auch hierdurch zusätzliches Gewicht eingespart werden kann.

Die Erfindung zeigt ihre besonderen Vorteile im Rahmen einer Anlage, bei der als Medium des Kühl- beziehungsweise Heizkreislaufs CO₂ vorgesehen ist. Derartige Kühlsysteme auf der Basis von CO₂ werden in der Zukunft deutlich an Bedeutung gewinnen, da ein herkömmliches Kältemittel durch eine problemlos zu entsorgende Substanz, nämlich CO₂, ersetzt wird. Besonders aufgrund der Möglichkeiten der Leistungssteigerung mittels eines inneren Wärmeübertragers ist die Erfindung im Zusammenhang mit CO₂ als Kühl- beziehungsweise Heizmittel besonders nützlich.

Bevorzugt ist der innere Wärmeübertrager in µ-Struktur-Technik aufgebaut. Insbesondere bei CO₂ als Kältemittel erlaubt die Zusammenfassung der Komponenten im Modul 26 den Einsatz von Bauteilen in µ-Struktur-Technik, da hierdurch die Druckverluste innerhalb des Moduls hinreichend klein sind.

### Zeichnungen

Die Erfindung wird nun mit Bezug auf die begleitenden Zeichnungen anhand bevorzugter Ausführungsformen beispielhaft erläutert.

Dabei zeigt:
- Figur 1: eine schematische Darstellung einer ersten Ausführungsform der Erfindung;
- Figur 2-: eine schematische Darstellung der ersten Ausführungsform der Erfindung in einem veränderten Betriebsmodus;
- Figur 3: eine schematische Darstellung einer dritten Ausführungsform der Erfindung;
- Figur 4: eine schematische Darstellung einer vierten Ausführungsform der Erfindung;
- Figur 5: eine schematische Darstellung einer ersten Ausführungsform des Standes der Technik; und
- Figur 6: eine schematische Darstellung einer zweiten Ausführung des Standes der Technik.

### Beschreibung der Ausführungsbeispiele

In der nachfolgenden Beschreibung der Zeichnungen werden gleiche oder vergleichbare Komponenten mit denselben Bezugszeichen gekennzeichnet.

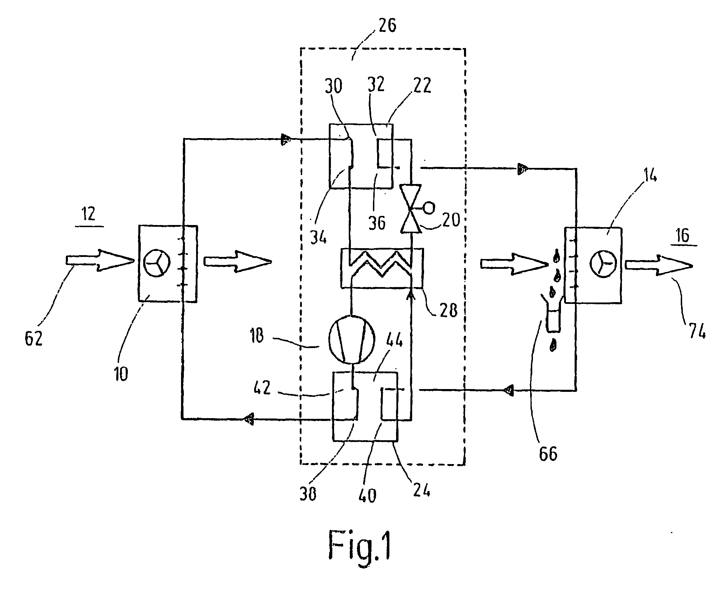

Figur 1 zeigt eine schematische Darstellung einer erfindungsgemäßen Anordnung zum Kühlen beziehungsweise zum Heizen. Die umschaltbaren Komponenten der Anordnung sind in der Darstellung gemäß Figur 1 so geschaltet, dass sich die Anlage im Kühlbetrieb befindet. In einen ersten Wärmeübertrager 10 wird ein Medium eingeleitet. In dem Wärmeübertrager findet ein Austausch von Wärme zwischen einem Wärmereservoir 12 und dem eingeleiteten Medium statt, so dass Umgebungsluft 62 erwärmt wird und im Gegenzug das Medium abgekühlt wird. Das abgekühlte Medium verlässt den ersten Wärmeübertrager 10 und tritt nachfolgend in ein Modul 26 ein.

Die in dem Modul 26 stattfindenden Vorgänge werden weiter unten erläutert.

Das Medium tritt aus dem Modul 26 in abgekühlter Form aus und nachfolgend in einen zweiten Wärmeübertrager 14 ein. In diesem zweiten Wärmeübertrager tritt weiterhin Umgebungsluft beziehungsweise Umluft ein, so dass ein in dem Wärmeübertrager 14 abgekühlter Luftstrom 74 in den zu kühlenden Raum 16 eintritt. Dabei entsteht Kondensat 66. Das aufgrund der Abkühlung der Umgebungsluft beziehungsweise der Umluft 74 erwärmte und verdampfte Medium tritt aus dem zweiten Wärmeübertrager 14 aus. Nachfolgend tritt das Medium in das Modul 26 ein. In diesem Modul wird das Medium erwärmt und auf einen höheren Druck gebracht. Aus dem Modul 26 tritt nachfolgend erwärmtes und verdichtetes Medium aus, so dass es wieder dem ersten Wärmeübertrager zugeführt werden kann. Der Kreislauf ist geschlossen.

In dem Modul 26 sind mehrere Komponenten integriert, welche für den Betrieb der Anlage wesentlich sind. Das Modul 26 umfasst ein erstes Ventil 22 mit einem ersten Port 30, einem zweiten Port 32, einem dritten Port 34 und einem vierten Port 36. Das Modul 26 umfasst ferner ein zweites Ventil 24 mit einem ersten Port 38, einem zweiten Port 40, einem dritten Port 42 und einem vierten Port 44. Weiterhin enthält das Modul 26 einen Kompressor 18, ein Expansionsorgan 20 und einen inneren Wärmeübertrager 28. In Figur 1 sind das erste Ventil 22 und das zweite Ventil 24 so geschaltet, dass sich die Anlage im Kühlbetrieb befindet. Tritt nun das in dem ersten Wärmeübertrager 10 abgekühlte Medium in das Modul 26 und somit in das erste Ventil 22 ein, so gelangt es zunächst zu dem ersten Port 30. Der erste Port 30 ist mit dem dritten Port 34 verbunden. Der dritte Port 34 steht mit dem inneren Wärmeübertrager 28 in Verbindung. Das Medium wird somit in den inneren Wärmeübertrager 28 geleitet, dessen Funktion weiter unten beschrieben wird. Nach dem Austritt des Mediums aus dem inneren Wärmeübertrager 28 tritt das Medium in ein Expansionsorgan 20 ein. In diesem Expansionsorgan 20 wird das Medium expandiert und somit abgekühlt. Das aus dem Expansionsorgan 20 austretende Medium gelangt zu dem zweiten Port 32 des Ventils 22, welcher mit dem Expansionsorgan 20 in Verbindung steht. Der zweite Port 32 ist mit dem vierten Port 36 des ersten Ventils verbunden, so dass das Medium zu dem vierten Port 36 geleitet wird. Von dort aus tritt das Medium aus dem Modul 26 aus und in den zweiten Wärmeübertrager 14 ein.

Bei der Rückführung des Mediums durchläuft dieses ebenfalls das Modul 26. Das Medium tritt in das Modul 26 ein, wo es zunächst zu dem vierten Port 44 des zweiten Ventils gelangt. Der vierte Port 44 des zweiten Ventils 24 ist mit dem zweiten Port 40 des zweiten Ventils 24 verbunden. Das Medium wird somit zu dem zweiten Port 40 des zweiten Ventils 24 geleitet und von dort aus zu dem inneren Wärmeübertrager 28, welcher mit dem zweiten Port 40 des zweiten Ventils 24 verbunden ist. Nach dem Durchlaufen des inneren Wärmeübertragers tritt das Medium aus dem inneren Wärmeübertrager 28 aus und gelangt zu einem Kompressor 18. In diesem Kompressor 18 wird das Medium erwärmt und komprimiert. Der Ausgang des Kompressors ist mit dem dritten Port 42 des zweiten Ventils verbunden. In dem vorliegenden Schaltzustand ist der dritte Port 42 mit dem ersten Port 38 des zweiten Ventils 24 verbunden. Das Medium wird somit von dem dritten Port 42 des zweiten Ventils 24 zu dem ersten Port 38 des zweiten Ventils 24 geführt. Der erste Port ist mit dem ersten Wärmeübertrager 10 verbunden, so dass das Medium aus dem Modul 26 austritt und zu dem ersten Wärmeübertrager 10 gelangen kann.

Insbesondere beim Betrieb der Anlage mit CO₂ als Kühlmedium erweist es sich als nützlich, einen inneren Wärmeübertrager 28 vorzusehen. Dieser innere Wärmeübertrager dient einer Leistungssteigerung. Das in das Expansionsorgan 20 einströmende Medium wird durch das rückgeführte Medium gekühlt. Im Gegenzug wird das rückgeführte Medium, welches in den Kompressor 18 einströmt durch das hinströmende Medium erwärmt.

Anhand von Figur 1 ist erkennbar, dass an dem Modul 26 lediglich vier externe Druckanschlüsse erforderlich sind, nämlich der erste Port 30 des ersten Ventils 22 für die Verbindung zum ersten Wärmeübertrager 10, der dritte Port 36 des ersten Ventils 22 für die Verbindung des ersten Ventils 22 mit dem zweiten Wärmeübertrager 14. Der erste Port 38 des zweiten Ventils 24 für die Verbindung des zweiten Ventils 24 mit dem ersten Wärmeübertrager 10 und der vierte Port 44 des zweiten Ventils 24 für die Verbindung des zweiten Ventils 24 mit dem zweiten Wärmeübertrager 14. Insofern werden im Vergleich zu etwa der Ausführungsform gemäß Figur 6, welche im Rahmen der Beschreibung zum Stand der Technik erläutert wird, erhebliche Leitungslängen eingespart. Ebenfalls wird der Installationsaufwand reduziert.

Es ist auch denkbar, dass der Kompressor 18 nicht in dem Modul 26 integriert ist. Bei einer solchen Anordnung ist das Modul 26 mit zwei weiteren Druckanschlüssen auszustatten, was ebenfalls noch eine erhebliche Reduzierung des hydraulischen Schaitungsaufwandes mit sich bringt. Ferner können die Komponenten auch ganz oder teilweise in einem Block integriert sein. Hierdurch kann eine kompakte Darstellung des Moduls erreicht werden. Damit lässt sich auf einfachere Weise eine dichte Realisierung ermöglichen.

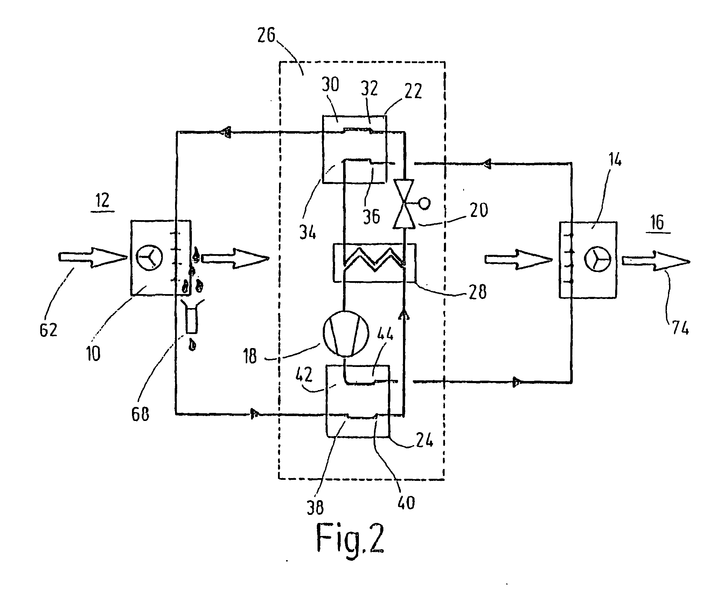

In Figur 2 ist die Anlage gemäß Figur 1 in einem anderen Schaltungszustand gezeigt. Die Anlage gemäß Figur 2 befindet sich im Heizbetrieb. Die Umschaltung von dem Kühlbetrieb gemäß Figur 1 zu dem Heizbetrieb gemäß Figur 2 erfolgt durch Umschalten des ersten Ventils 22 und des zweiten Ventils 24. Bei dem ersten Ventil 22 ist nun der erste Port 30 mit dem zweiten Port 32 verbunden. Der dritte Port 34 des ersten Ventils 22 ist mit dem vierten Port 36 des ersten Ventils 22 verbunden. Bei dem zweiten Ventil 24 ist der erste Port 38 mit dem zweiten Port 40 verbunden. Der dritte Port 42 ist mit dem vierten Port 44 verbunden. Strömt nun kaltes Medium in den ersten Wärmeübertrager 10 ein, so nimmt dieses Wärme aus dem Wärmereservoir 12 auf, so dass die Umgebungsluft 62 abgekühlt wird. Dabei kann Kondensat beziehungsweise Eis 68 entstehen. Nach dem Austritt des ersten Mediums aus dem ersten Wärmeübertrager 10 tritt das Medium im erwärmten Zustand in das Modul 26 ein. Dort gelangt es zu dem ersten Port 38 des zweiten Ventils 24. Der erste Port 38 ist mit dem zweiten Port 40 verbunden, welcher mit dem inneren Wärmeübertrager 28 in Verbindung steht. Somit wird das Medium zu dem inneren Wärmeübertrager 28 geführt. Nach dem Durchtritt des Mediums durch den inneren Wärmeübertrager 28 tritt das Medium in den Kompressor 18 ein und nachfolgend gelangt es zu dem dritten Port 42 des zweiten Ventils 24. Dieser dritte Port 42 des zweiten Ventils 24 ist mit dem vierten Port 44 des zweiten Ventils 24 verbunden, welcher mit dem zweiten Wärmeübertrager 14 in Verbindung steht. Somit gelangt das Medium von dem Kompressor 18 in erwärmten Zustand zu dem zweiten Wärmeübertrager 14. In diesem zweiten Wärmeübertrager 14 wird Umgebungsluft oder Umluft erwärmt, so dass letztlich warme Luft 24 an einen zu beheizenden Raum 16 abgegeben werden kann. Dabei kühlt das Medium ab. Das abgekühlte Medium wird zu dem Modul 26 zurückgeführt. Dort erreicht das Medium zunächst den vierten Port 36 des ersten Ventils 22. Der vierte Port 36 des ersten Ventils 22 ist mit dem dritten Port 34 des ersten Ventils 22 verbunden. Dieser vierte Port 34 steht mit dem inneren Wärmeübertrager 28 in Verbindung. Somit gelangt das Medium von dem zweiten Wärmeübertrager 14 zu dem inneren Wärmeübertrager 28. Nach dem Durchtritt des Mediums durch den inneren Wärmeübertrager 28 tritt das Medium in das Expansionsorgan 20 ein, wo es expandiert und abkühlt. Nach dem Austritt aus dem Expansionsorgan 20 gelangt das Medium zu dem zweiten Port 32 des ersten Ventils 22. Der zweite Port 32 ist mit dem ersten Port 30 des ersten Ventils 22 verbunden, welcher mit dem ersten Wärmeübertrager 10 in Verbindung steht. Somit gelangt das Medium von dem Expansionsorgan 20 im abgekühlten Zustand über den zweiten Port 32 und den ersten Port 30 des ersten Ventils 22 zu dem ersten Wärmeübertrager 10. Der Kreislauf ist geschlossen.

Wiederum dient auch im Heizbetrieb der innere Wärmeübertrager 28 der Leistungssteigerung, was insbesondere bei einem Betrieb mit CO₂ als Medium besonders zu bevorzugen ist. Das Medium wird vor dem Eintritt in den Kompressor in den inneren Wärmetauscher 28 erwärmt, was durch die Wechselwirkung mit dem rückströmenden Medium aus dem zweiten Wärmeübertrager 14 erfolgt. Im Gegenzug wird das rückströmende Medium vor der Expansion in dem Expansionsorgan 20 durch Wechselwirkung mit dem hinströmenden Medium abgekühlt.

Die Umschaltung zwischen den Schaltzuständen gemäß Figur 1 und Figur 2 kann auf rationelle Weise so erfolgen, dass für die gleichzeitig zu schaltenden Elementen gemeinsame Antriebe verwendet werden können. Dies senkt den Schaltaufwand und ebenfalls das Gewicht des Moduls 26 und somit der gesamten Anlage. Besonders vorteilhaft kann sein, dass für die Ansteuerung der Ventile ein hydraulischer Antrieb verwendet wird, welcher durch den Druckunterschied am Kompressor gespeist wird. Zur Ansteuerung einer solchen Hydraulik können ein einziges oder mehrere sehr kleine Magnetventile verwendet werden. Ebenfalls kann die Vorrichtung gemäß den Figuren 1 und 2 so weitergebildet sein, dass Drucksensoren für Hoch- und Niederdruck ebenfalls in dem Modul 26 integriert sind.

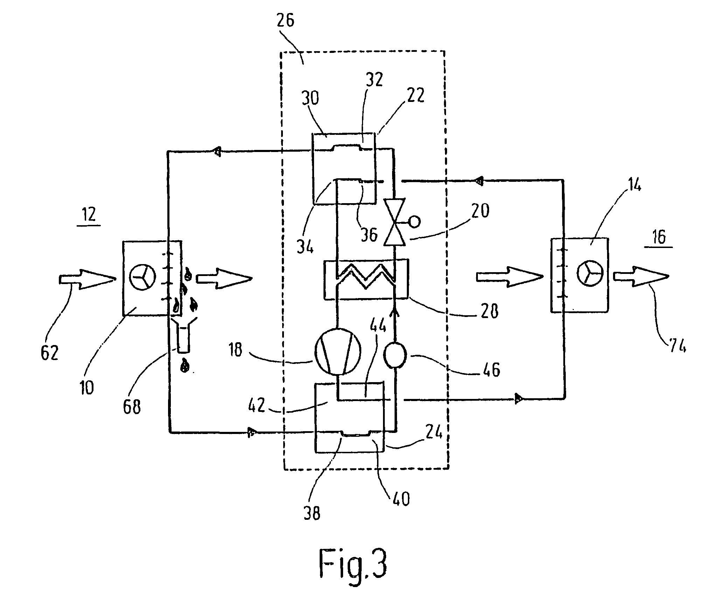

In Figur 3 ist eine weitere schematische Darstellung einer erfindungsgemäßen Anordnung gezeigt. Diese entspricht weitgehend der Darstellung gemäß Figur 2. Zusätzlich zu Figur 2 ist in dem Modul 26 ein Sammler 46 integriert, welcher in dem dargestellten Heizbetrieb an der Eingangsseite des inneren Wärmeübertragers 28 angeordnet ist und mit dem zweiten Port 40 des ersten Ventils 24 in Verbindung steht. Der Sammler 46 dient sowohl der Bevorratung von Kältemittel als auch dem Abtrennen von Flüssigkeit und Gas, welches in das Modul 26 eintreten kann. Ein vorteilhafte Ausbildung besteht darin, dass alle oder einige Komponenten des Moduls 26 in einem Druckgefäß integriert sind, welches dann als Sammler dient. Hierdurch kann nicht nur Bauraum eingespart werden, sondern vor allem kann die Abdichtung der Komponenten nach außen durch das Druckgefäß übernommen werden. Dies erleichtert die leckagearme Fertigung des Moduls 26 erheblich.

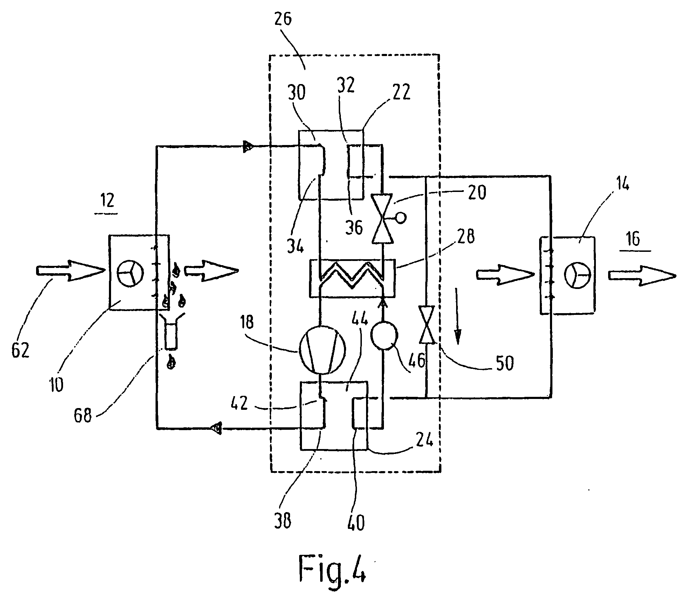

In Figur 4 ist eine weitere schematische Darstellung einer erfindungsgemäßen Anordnung gezeigt. Diese weist zusätzlich zu den Komponenten gemäß Figur 3 ein Heißgas-Bypass-Ventil 50 auf. Dieses Ventil 50 verbindet die Eingangsseite mit der Ausgangsseite des zweiten Wärmeübertragers 14. Auch dieses Ventil 50 kann in dem Modul 26 integriert sein. Die Anlage ist in einem Schaltzustand für einen Heißgas-Abtau-Betrieb gezeigt. Durch den Kurzschluss des Wärmeübertragers 14 durch das Ventil 50 gelangt ein Großteil des Fluids vom Expansionsorgan 20 direkt in das Ventil 24. Hierdurch wird im Wärmeübertrager 14 nahezu keine Wärme übertragen. Die Abwärme des Systems wird vom Fluid vollständig im Wärmeübertrager 10 abgegeben. Auf der Luftseite dieses Wärmeübertragers befindliches Eis kann hierdurch abgesprengt beziehungsweise geschmolzen werden.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung zu verlassen, wie in den beigefügten Ansprüchen definiert.

## Patentansprüche

1. Anordnung zum Kühlen beziehungsweise Heizen mit,
- einem ersten Wärmeübertrager (10) zur Abgabe oder Entnahme von Wärme in ein beziehungsweise aus einem Wärmereservoir (12),
- einem zweiten Wärmeübertrager (14) zur Entnahme oder Abgabe von Wärme aus einem beziehungsweise in einen zu kühlenden beziehungsweise zu heizenden Raum (16),
- einem Kompressor (18),
- einem Expansionsorgan (20) und
- Mitteln (22, 24) zum Umschalten zwischen einem Kühlbetrieb und einem Heizbetrieb, die in einem Modul (26) integriert sind,
wobei der erste Wärmeübertrager (10) im Heizbetrieb Wärme aus dem Wärmereservoir (12) entnimmt und im Kühlbetrieb Wärme in das Wärmereservoir (12) abgibt, während der zweite Wärmeübertrager (14) im Heizbetrieb Wärme in den zu heizenden Raum (16) abgibt und im Kühlbetrieb Wärme aus dem zu kühlenden Raum (16) entnimmt, und
wobei der erste Wärmeübertrager (10), der zweite Wärmeübertrager (14), der Kompressor (18), das Expansionsorgan (20) und die Mittel (22, 24) zum Umschalten einen von CO₂ durchströmten geschlossenen Heiz- bzw. Kühlkreislauf bilden,
**dadurch gekennzeichnet, dass** die Mittel zum Umschalten ein erstes Ventil (22) und ein zweites Ventil (24) mit jeweils vier Ports (30, 32, 34, 36; 38, 40, 42, 44) umfassen.

2. Anordnung nach Anspruch 1, **dadurch gekennzeichnet, dass** zwischen dem ersten Wärmeübertrager (10) und dem zweiten Wärmeübertrager (14) ein innerer Wärmeübertrager (28) vorgesehen ist.

3. Anordnung nach Ansprüch 2, **dadurch gekennzeichnet, dass** bei dem ersten Ventil (22)
- ein erster Port (30) mit dem ersten Wärmeübertrager (10) verbunden ist,
- ein zweiter Port (32) mit dem Expansionsorgan (20) verbunden ist,
- ein dritter Port (34) mit dem inneren Wärmeübertrager (28) verbunden ist und
- ein vierter Port (36) mit dem zweiten Wärmeübertrager (14) verbunden ist.

4. Anordnung nach einem der Ansprüche, 2 oder 3 **dadurch gekennzeichnet, dass** bei dem zweiten Ventil (24)
- ein erster Port (38) mit dem ersten Wärmeübertrager (10) verbunden ist,
- ein zweiter Port (40) mit dem inneren Wärmeübertrager (28) verbunden ist,
- ein dritter Port (42) mit dem Kompressor (18) verbunden ist und
- ein vierter Port (44) mit dem zweiten Wärmeübertrager (14) verbunden ist.

5. Anordnung nach Anspruch 3 und 4, **dadurch gekennzeichnet,**
- **dass** im Kühlbetrieb der erste Port (30) und der dritte Port (34) des ersten Ventils (22) und der zweite Port (32) und der vierte Port (36) des ersten Ventils (22) miteinander verbunden sind und
- **dass** im Kühlbetrieb der erste Port (38) und der dritte Port (42) des zweiten Ventils (24) und der zweite Port (40) und der vierte Port (44) des zweiten Ventils (24) miteinander verbunden sind.

6. Anordnung nach einem der Ansprüche 3 und 4 oder 5, **dadurch gekennzeichnet,**
- **dass** im Heizbetrieb der erste Port (30) und der zweite Port (32) des ersten Ventils (22) und der dritte Port (34) und der vierte Port (36) des ersten Ventils (22) miteinander verbunden sind und
- **dass** im Heizbetrieb der erste Port (38) und der zweite Port (40) des zweiten Ventils (24) und der dritte Port (42) und der vierte Port (44) des zweiten Ventils (24) miteinander verbunden sind.

7. Anordndung nach einem der vorangehenden Ansprüche, **dadurch gekennzeichnet, dass** die Mittel zum Umschalten (22, 24) wenigstens teilweise von einem gemeinsamen Antrieb betätigbar sind.

8. Anordnung nach einem der vorangehenden Ansprüche, **dadurch gekennzeichnet, dass** die Mittel zum Umschalten (22, 24) wenigstens teilweise von einem hydraulischen Antrieb betätigbar sind.

9. Anordnung nach Anspruch 8, **dadurch gekennzeichnet, dass** der hydraulische Antrieb von der Druckdifferenz vor und nach dem Kompressor gespeist wird.

10. Anordnung nach einem der vorangehenden Ansprüche und Anspruch 2, **dadurch gekennzeichnet, dass** in dem Modul (26) der innere Wärmeübertrager (28) integriert ist.

11. Anordnung nach einem der vorangehenden Ansprüche, **dadurch gekennzeichnet, dass** in dem Modul (26) das Expansionsorgan (20) integriert ist.

12. Anordnung nach einem der vorangehenden Ansprüche, **dadurch gekennzeichnet, dass** in dem Modul (26) der Kompressor (18) integriert ist.

13. Anordnung nach einem der vorangehenden Ansprüche, **dadurch gekennzeichnet, dass** in dem Modul (26) ein Sammler integriert ist.

14. Anordnung nach einem der vorangehenden Ansprüche, **dadurch gekennzeichnet, dass** in dem Modul (26) ein Ölabscheider integriert ist.

15. Anordnung nach einem der vorangehenden Ansprüche, **dadurch gekennzeichnet, dass** in dem Modul (26) ein Heißgas-Bypass-Ventil (50) integriert ist.

16. Anordnung nach einem der vorangehenden Ansprüche, **dadurch gekennzeichnet, dass** in dem Modul (26) Drucksensoren integriert sind.

17. Anordnung nach einem der vorangehenden Ansprüche, **dadurch gekennzeichnet, dass** in dem Modul (26) die Steuerung der Ventile integriert ist.

18. Anordnung nach einem der Ansprüche 10 bis 17, **dadurch gekennzeichnet, dass** zumindest ein Teil der in dem Modul (26) integrierbaren Komponenten in einem gemeinsamen Druckgehäuse angeordnet sind.

19. Anordnung nach einem der Ansprüche 10 bis 18, **dadurch gekennzeichnet, dass** zumindest ein Teil der in dem Modul (26) integrierbaren Komponenten in einem als Sammler ausgebildeten Druckgehäuse angeordnet sind.

20. Anordnung nach einem der vorangehenden Ansprüche und Anspruch 2 **dadurch gekennzeichnet, dass** der innere Wärmeübertrager (28) in µ-Struktur-Technik aufgebaut ist.

## Claims

1. System for cooling and heating, having
- a first heat exchanger (10) for outputting or removing heat to or from a heat reservoir (12),
- a second heat exchanger (14) for removing or outputting heat from or to a space (16) which is to be cooled or heated,
- a compressor (18),
- an expansion member (20), and
- means (22, 24) for switching between a cooling mode and a heating mode, which are integrated in a module (26),
the first heat exchanger (10) removing heat from the heat reservoir (12) in heating mode and outputting heat to the heat reservoir (12) in cooling mode, while the second heat exchanger (14) outputs heat to the space (16) to be heated in heating mode and removes heat from the space (16) to be cooled in cooling mode, and the first heat exchanger (10), the second heat exchanger (14), the compressor (18), the expansion member (20) and the switching means (22, 24) forming a closed heating or cooling circuit through which CO₂ flows,
**characterized in that** the switching means comprise a first valve (22) and a second valve (24) each having four ports (30, 32, 34, 36; 38, 40, 42, 44).

2. System according to Claim 1, **characterized in that** an inner heat exchanger (28) is provided between the first heat exchanger (10) and the second heat exchanger (14).

3. System according to Claim 2, **characterized in that** in the first valve (22)
- a first port (30) is connected to the first heat exchanger (10),
- a second port (32) is connected to the expansion member (20),
- a third port (34) is connected to the inner heat exchanger (28), and
- a fourth port (36) is connected to the second heat exchanger (14).

4. System according to either of Claims 2 and 3, **characterized in that** in the second valve (24)
- a first port (38) is connected to the first heat exchanger (10),
- a second port (40) is connected to the inner heat exchanger (28),
- a third port (42) is connected to the compressor (18), and
- a fourth port (44) is connected to the second heat exchanger (14).

5. System according to Claims 3 and 4, **characterized**
- **in that** in cooling mode the first port (30) and the third port (34) of the first valve (22) and the second port (32) and the fourth port (36) of the first valve (22) are connected to one another, and
- **in that** in cooling mode the first port (38) and the third port (42) of the second valve (24) and the second port (40) and the fourth port (44) of the second valve (24) are connected to one another.

6. System according to one of Claims 3 and 4 or 5,
**characterized**
- **in that** in heating mode the first port (30) and the second port (32) of the first valve (22) and the third port (34) and the fourth port (36) of the first valve (22) are connected to one another, and
- **in that** in heating mode the first port (38) and the second port (40) of the second valve (24) and the third port (42) and the fourth port (44) of the second valve (24) are connected to one another.

7. System according to one of the preceding claims, **characterized in that** the switching means (22, 24) can be at least partially actuated by a common drive.

8. System according to one of the preceding claims, **characterized in that** the switching means (22, 24) can at least partially be actuated by a hydraulic drive.

9. System according to Claim 8, **characterized in that** the hydraulic drive is fed by the pressure difference upstream and downstream of the compressor.

10. System according to one of the preceding claims and Claim 2, **characterized in that** the inner heat exchanger (28) is integrated in the module (26).

11. System according to one of the preceding claims, **characterized in that** the expansion member (20) is integrated in the module (26).

12. System according to one of the preceding claims, **characterized in that** the compressor (18) is integrated in the module (26).

13. System according to one of the preceding claims, **characterized in that** a collector is integrated in the module (26).

14. System according to one of the preceding claims, **characterized in that** an oil separator is integrated in the module (26).

15. System according to one of the preceding claims, **characterized in that** a hot-gas bypass valve (50) is integrated in the module (26).

16. System according to one of the preceding claims, **characterized in that** pressure sensors are integrated in the module (26).

17. System according to one of the preceding claims, **characterized in that** the control of the valves is integrated in the module (26).

18. System according to one of Claims 10 to 17,
**characterized in that** at least some of the components which can be integrated in the module (26) are arranged in a common pressure housing.

19. System according to one of Claims 10 to 18,
**characterized in that** at least some of the components which can be integrated in the module (26) are arranged in a pressure housing designed as a collector.

20. System according to one of the preceding claims and Claim 2, **characterized in that** the inner heat exchanger (28) is constructed using microstructuring technology.

## Revendications

1. Installation de refroidissement ou de chauffage, comprenant :
- un premier échangeur de chaleur (10) pour délivrer ou prélever de la chaleur dans ou d'un réservoir thermique (12) ;
- un deuxième échangeur de chaleur (14) pour prélever ou délivrer de la chaleur d'un ou dans une chambre (16) à refroidir ou à chauffer ;
- un compresseur (18) ;
- un organe de détente (20) ; et
- des moyens (22, 24) pour commuter entre un mode de refroidissement et un mode de chauffage qui sont intégrés dans un module (26) ;
- dans le mode chauffage, le premier échangeur de chaleur (10) prélevant de la chaleur du réservoir de chaleur (12) alors que, dans le mode refroidissement, il délivre la chaleur dans le réservoir de chaleur, et dans le mode chauffage le deuxième échangeur de chaleur (14), délivrant la chaleur dans la chambre (16) à chauffer alors que dans le mode refroidissement il prélève la chaleur de la chambre (16) à refroidir, et
- le premier échangeur de chaleur (10), le deuxième échangeur de chaleur (14), le compresseur (18), l'organe de détente (20) et les moyens (22, 24) de commutation formant un circuit fermé de chauffage ou de refroidissement traversé par du CO₂,
**caractérisée en ce que**
les moyens de commutation comprennent une première soupape (22) et une deuxième soupape (24) comportant à chaque fois quatre points de connexion (30, 32, 34, 36 ; 38, 40, 42, 44).

2. Installation selon la revendication 1,
**caractérisée par**
un échangeur de chaleur interne (28)entre le premier échangeur de chaleur (10) et le deuxième échangeur de chaleur (14).

3. Installation selon la revendication 2,
**caractérisée en ce que**
dans la première soupape (22),
- un premier point de connexion (30) est relié au premier échangeur de chaleur (10),
- un deuxième point de connexion (32) est relié à l'organe de détente (20) ;
- un troisième point de connexion (34) est relié à l'échangeur de chaleur interne (28), et
- un quatrième point de connexion (36) est relié au deuxième échangeur de chaleur (14).

4. Installation selon l'une des revendications 2 ou 3,
**caractérisée en ce que**
dans la deuxième soupape (24),
- un premier point de connexion (38) est relié au premier échangeur de chaleur (10),
- un deuxième point de connexion (40) est relié à l'échangeur de chaleur interne (28) ;
- un troisième point de connexion (42) est relié au compresseur (18), et
- un quatrième point de connexion (44) est relié au deuxième échangeur de chaleur (14).

5. Installation selon la revendication 3 et 4,
**caractérisée en ce que**
- dans le mode refroidissement, le premier point de connexion (30) et le troisième point de connexion (34) de la première soupape (22) et le deuxième point de connexion (32) et le quatrième point de connexion (36) de la première soupape (22) sont reliés entre eux, et
- dans le mode refroidissement, le premier point de connexion (38) et le troisième point de connexion (42) de la deuxième soupape (24) et le deuxième point de connexion (40) et le quatrième point de connexion (44) de la deuxième soupape (24) sont reliés entre eux.

6. Installation selon l'une des revendications 3 et 4 ou 5,
**caractérisée en ce que**
- dans le mode chauffage, le premier point de connexion (30) et le deuxième point de connexion (32) de la première soupape (22) et le troisième point de connexion (34) et le quatrième point de connexion (36) de la première soupape (22) sont reliés entre eux, et
- dans le mode chauffage, le premier point de connexion (38) et le deuxième point de connexion (40) de la deuxième soupape (24) et le troisième point de connexion (42) et le quatrième point de connexion (44) de la deuxième soupape (24) sont reliés entre eux.

7. Installation selon l'une des revendications précédentes,
**caractérisée en ce que**
les moyens de commutation (22, 24) peuvent être actionnés au moins partiellement par un entraînement commun.

8. Installation selon l'une des revendications précédentes,
**caractérisée en ce que**
les moyens de commutation (22, 24) peuvent être actionnés au moins partiellement par un entraînement hydraulique.

9. Installation selon la revendication 8,
**caractérisée en ce que**
l'entraînement hydraulique est alimenté par la différence de pression avant et après le compresseur.

10. Installation selon l'une des revendications précédentes et la revendication 2,
**caractérisée en ce que**
l'échangeur de chaleur interne (28) est intégré dans le module (26).

11. Installation selon l'une des revendications précédentes,
**caractérisée en ce que**
l'organe de détente (20) est intégré dans le module (26).

12. Installation selon l'une des revendications précédentes,
**caractérisée en ce que**
le compresseur (18) est intégré dans le module (26).

13. Installation selon l'une des revendications précédentes,
**caractérisée en ce qu'** un collecteur est intégré dans le module (26).

14. Installation selon l'une des revendications précédentes,
**caractérisée en ce qu'** un séparateur d'huile est intégré dans le module (26).

15. Installation selon l'une des revendications précédentes,
**caractérisée en ce qu'**
une soupape de dérivation des gaz chauds (50) est intégrée dans le module (26).

16. Installation selon l'une des revendications précédentes,
**caractérisée en ce que**
des capteurs de pression sont intégrés dans le module (26).

17. Installation selon l'une des revendications précédentes,
**caractérisée en ce que**
la commande des soupapes est intégrée dans le module (26).

18. Installation selon l'une des revendications 10 à 17,
**caractérisée en ce qu'**
au moins une partie des composants pouvant être intégrés dans le module (26) est disposée dans un boîtier de pression commun.

19. Installation selon l'une des revendications 10 à 18,
**caractérisée en ce qu'**
au moins une partie des composants pouvant être intégrés dans le module (26) est disposée dans un boîtier de pression réalisé sous forme de collecteur.

20. Installation selon l'une des revendications précédentes et la revendication 2,
**caractérisée en ce que**
l'échangeur de chaleur interne (28) est monté par technique de microstructure.
